Europäisches Patentamt

European Patent Office

Office européen des brevets

(19)

(11) Publication number: **0 112 003**
**B1**

(12) **EUROPEAN PATENT SPECIFICATION**

(45) Date of publication of patent specification: **07.09.88**

(51) Int. Cl.⁴: **F 01 D 5/14**

(21) Application number: **83306343.1**

(22) Date of filing: **19.10.83**

(54) **Rotor blade form for the first stage of a combustion turbine.**

(30) Priority: **22.10.82 US 436102**

(43) Date of publication of application:
**27.06.84 Bulletin 84/26**

(45) Publication of the grant of the patent:
**07.09.88 Bulletin 88/36**

(84) Designated Contracting States:
**BE CH DE FR GB IT LI NL SE**

(56) References cited:
**GB-A- 686 807**
**US-A-1 548 613**
**US-A-4 111 604**

**BROWN BOVERI MITTEILUNGEN, vol. 59, no.
1, January 1972, pages 42-53, Baden**

(73) Proprietor: **WESTINGHOUSE ELECTRIC
CORPORATION
Westinghouse Building Gateway Center
Pittsburgh Pennsylvania 15235 (US)**

(72) Inventor: **Brown, David Lee
8 Rolling Lane
Medfield Massachusetts (US)**
Inventor: **Fentress, William Kilby
903 Truepenny Road
Wallingford Pennsylvania (US)**
Inventor: **Taylor, Melvin Dallas
1813 Hiltonia Circle
West Palm Beach Florida (US)**

(74) Representative: **van Berlyn, Ronald Gilbert
23, Centre Heights
London, NW3 6JG (GB)**

## Description

The present invention relates generally to combustion turbine rotor blades and, more particularly, to a cooled, first-stage rotor blade for a land-based combustion turbine.

Rotor blades and stator vanes are key elements in the power generation cycle of a combustion turbine. The airfoil shape, which is unique for each row of blades or vanes, defines the shape of the airflow passage through that row and thereby governs the velocity of the expanding gases and distributes the work among the turbine stages.

Although turbine airfoils typically share the same general shape, that is, each typically has a leading edge, a trailing edge, a concave surface, and a convex surface, the airfoil shape common to a particular row of blades or vanes differs from the airfoil shape for every other row within that turbine. Likewise, no turbines of different designs share airfoils of the same shape. The structural differences in airfoil shape, which may appear minute to the untrained observer, result in significant variations in aerodynamic characteristics, stress patterns, operating temperature, and natural frequency of the airfoil. These variations, in turn, determine the operating life of the airfoil within the boundary conditions (turbine inlet temperature, compressor pressure ratio, and engine speed), which are generally determined prior to airfoil development.

Hence, in the environment of a particular set of overall turbine design parameters, a particular combination of structural improvements to the airfoil shape may reduce aerodynamic losses so as to improve turbine efficiency and performance (increase power output) without need for increasing the turbine inlet temperature. Shape improvements in the airfoil structure may also increase the cooling efficiency of the airfoil and thereby improve the operating life and reliability of the airfoil.

Reference is made to GB—A 686807 which teaches decreasing blade thickness, chord width and camber angle of blade profile from the blade root to the blade tip. It also teaches the requirement of twisting the blade after machining so that the desired chord angle is obtained at all blade radii.

Reference is also made to USA 4111604 which teaches cooling of a gas turbine by means of subsurface cooling channels extending from a gas turbine bucket platform to a manifold in the tip region of the bucket.

The invention consists in a cooled first stage rotor blade for a land-based combustion turbine capable of driving an electric generator to generate electric power in the range of 100 megawatts, said blade comprising an airfoil portion having a leading edge and a trailing edge with concave and convex surfaces therebetween providing a smooth airfoil surface, a root portion for affixing said blade to a turbine rotor, a platform portion joining said airfoil portion to said root portion, said airfoil portion having a gradually decreasing cross-sectional area with increasing radius, a maximum cross-sectional thickness which between said convex and concave sides decreases with increasing radius, a cross-sectional width which decreases with increasing radius, a chord which decreases with increasing radius, characterized in that the radial height or span of the airfoil portion is about 6.5 inches (165.0 mm), the airfoil portion having a maximum cross-sectional thickness that decreases from 1.00 inch (25.4 mm) to 0.78 of an inch (19.812 mm), the cross-sectional width that decreases from 3.853 inches (97.866 mm) to 3.240 inches (82.296 mm), the chord that decreases from 4.051 inches (102.895 mm) to 3.965 inches (100.711 mm), the leading edge having a radius that decreases from 0.141 inch (3.581 mm) to 0.102 inch (2.591 mm), the trailing edge radius increases with increasing blade radius from 0.074 inch (1.879 mm) to 0.075 inch (1.905 mm), said airfoil portion having a tip and sixteen cooling channels (CA to CT) of substantially circular cross-section extending radially from said root portion (27) through said airfoil portion (21) to said tip, said coolant channels being linear, with the location of said coolant channels defined by X—Y coordinates in preselected cross reference planes as defined by a holes location table as hereinbefore in the specification, and the surface profile of the blade airfoil portion (21) being defined by a series of X—Y coordinates in accordance with an airfoil coordinate points table as hereinbefore in the specification.

A more detailed understanding of the invention can be had from the following description of a preferred embodiment given by way of example and to be studied in conjunction with the accompanying drawings wherein:

Figure 1 shows a plot of velocity distribution curves for a first stage turbine blade made in accordance with a preferred embodiment of the invention;

Fig. 2 shows the profile of a typical cross-section of the airfoil portion of the first stage blade structured according to a preferred embodiment of the invention except that coolant channels are not shown;

Fig. 3 shows the trailing edge of the first stage blade in an elevational view of one end of the blade;

Fig. 4 shows a side elevational view of the blade;

Fig. 5 illustrates the blade coolant channel locations in another side elevational view of the blade;

Fig. 6 illustrates the twist of the blade in a plan view from the top of the blade; and

Fig. 7 shows the blade tip in an enlarged plan view of the top of the blade airfoil portion.

Development of the turbine section for a new commercial, power generation combustion turbine may require several years of painstaking effort to complete, in fact, the development of a single blade or vane structure for a turbine section (which might include four each of blades and vanes) may itself require several years of effort. The development effort comprises three basic divisions of labor: airfoil profile, airfoil cooling, and mechanical aspects.

The development process begins with the specification of the airfoil profile, which is actually the

**0 112 003**

definition of the airflow channel between two airfoils of a given row. The developer is provided certain boundary conditions (turbine design parameters which must be satisfied), such as turbine inlet temperature, compressor pressure ratio, and engine speed. In the case of the present invention, the goal of the turbine design process was to achieve an improvement in turbine performance (increased power to fuel ratio) while accepting some decrease in turbine inlet temperature (2005°F to 1985°F (1096°C to 1085°C)).

Given that the turbine section will comprise four stages, that is, four pairs of vane-blade row combinations, the profile developer must establish the radial equilibrium pattern and the work distribution among the four stages. This is called the blade path calculation. The radial equilibrium pattern establishes the swirling flow path, as it varies axially and radially, of the expanding gases flowing through the gradually increasing area of the annular turbine section. The work distribution among the stages establishes the amount of work done by the expanding gases at each stage. The two are interrelated, as the radial equilibrium pattern is, in a sense, determined by the angle of deflection and exit velocity of gases at each stage, this also governs the work done at each stage.

The profile developer has complete freedom to vary the choices of blade path parameters in an effort to maximize power output within the boundary conditions. The complex mathematical calculations required to accomplish this task are solved with the aid of a computer, which adjusts the solutions according to loss models designed to mirror the effects of losses in actual turbine operation. The final result of the blade path calculation is a set of radially varying velocity vectors for both airfoil rows of each of the four stages. The velocity vectors establish the desired magnitude and direction of gas flow entering and leaving each row of airfoils.

Once the blade path calculation is complete and acceptable, the profile developer uses the velocity vectors do derive an airfoil profile. This portion of the blade development process is performed for each of from two to five plane "slices" perpendicular to a radial line for each of the eight rows of airfoils. As is described in greater detail below, these plane slices are later combined to present a three dimensional picture of each airfoil.

Like that of varying parameters within the blade path calculation, this portion of the process requires engineering judgment derived from a thorough understanding and creative application of the underlying physical principles and extensive "hands-on" experience in the design process. Given the change in velocity vectors from the upstream side to the downstream side of a row, the developer determines the approximate profile of the desired airfoil. Certain descriptive dimensions defining this hypothetical profile are entered in a computer program, which generates a velocity distribution for that airfoil.

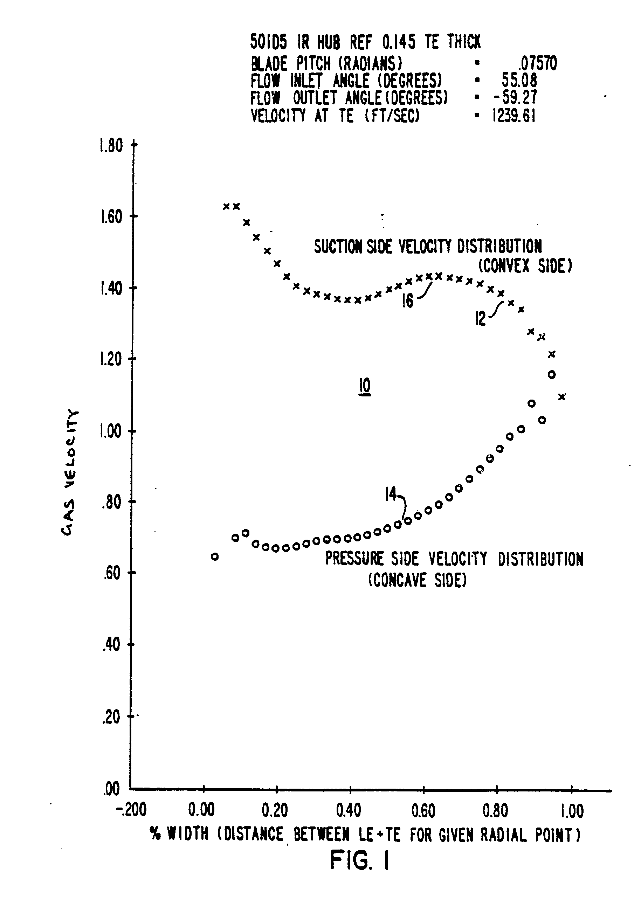

A velocity distribution for the airfoil of the present invention is shown in Figure 1. It comprises a plot 10 of the gas velocity (or the ratio of gas velocity $V$ to gas velocity $V_{TE}$ at the trailing edge) as a function of airfoil width. The airfoil width is, by definition, the maximum dimension of the airfoil along a line parallel to the rotor axis. The velocity distribution plot includes two curves: the velocity along the convex surface 12 and the velocity along the concave surface 14.

The velocity distribution generated from the trial profile is next analyzed in light of principles gleaned from experience to determine its acceptability. Certain features of the curve, for example the decrease in velocity from the point of relative maximum velocity 16 to the exit velocity may reveal flow tendencies which may give rise to problems. Drawing on creativity, experience, and skill, the developer may make alterations in the hypothetical profile to alleviate perceived shortcomings in the velocity distribution. In the example presented above, a relative maximum velocity 16 which exceeds the exit velocity by more than approximately 30% may indicate a tendency of the flow to separate from the airfoil surface and generate additional losses. Where this is deemed a substantial enough problem, the profile developer may alter the profile to reduce the change in velocity.

When an acceptable profile has been generated for each plane slice of the airfoil, the slices are combined and interpolated by a computer to produce a single three-dimensional airfoil. Conical slices of the three-dimensional airfoil corresponding to stream surfaces are subjected to velocity distribution analysis to ensure that the airfoil conforms to the previously determined radial patterns. When the airfoil profile is determined to be complete, it is passed to the cooling developer for the next stage of the development process.

The second stage of the development process involves the airfoil cooling. The basic procedure begins with the velocity distribution curves (Fig. 1) for the airfoil. A computer is used to convert the velocity distributions generated in the course of the profile development process into heat transfer curves for the outside wall for both the concave and the convex surfaces of the airfoil. The heat transfer curve is a plot of the heat transfer coefficient for the wall as a function of distance along the concave and convex surfaces of the airfoil. The outside wall heat transfer curve is used to produce a corresponding inside wall heat transfer curve. The goal of the blade cooling developer is to achieve inner airfoil cooling which effects the previously calculated inside wall heat transfer curve. The actual development process, like that of deriving the trial airfoil profile, requires the exercise of creativity and skill and engineering judgment gleaned from actual development experience.

In the case of the first stage blade, the cooling development process is simplified by the use of a single cooling technique, rather than the several techniques available in the case of vanes, to achieve the required level of airfoil cooling. The cooling technique for blades comprises a plurality of channels extending radially through the interior of the blade for a cooling air supply channel in the root to the blade tip. The

3

cooling developer must arrange the channels within the airfoil to achieve the cooling level indicated by the inside wall heat transfer curve. Should it prove impossible, due to some characteristic of the airfoil profile, to cool adequately the airfoil, it may be necessary to require the profile developer to restructure portions of the airfoil profile so as to accommodate the structure needed for adequate cooling.

The final division of responsibility respecting development of the first-stage blade structure and its shape is the mechanical aspect of the process. After receiving the airfoil profile and cooling arrangement, the mechanical developer specifies a platform for the blade and performs several mechanical analyses of the airfoil. The two primary checks, which are performed by computer, are a chordwise stress analysis and a natural frequency check. Should either of these analyses reveal problems, especially the more complex frequency check, it may be necessary to require the cooling developer or profile developer to make structural changes. Certain mechanical criteria must be met so as to guarantee the structural integrity of the airfoil. It is not unusual for an airfoil to be returned several times for rework by the profile or cooling developer. This interactive process is complex and time-consuming.

When the airfoil successfully passes the mechanical computer analyses, the mechanical developer prepares a root to adjoin the airfoil and platform of the blade. Thereafter, a rotating disk test is performed to determine the actual resonant frequency of the blade. Again, if the test reveals problems, further structural refinement may be necessary.

Variations in the structural shape of the airfoil with increasing radius determine the performance characteristics of the blade. Because the linear velocity of the airfoil increases with increasing radius, the flow angles of the expanding gases vary as well, giving rise to an aerodynamic requirement that the shape of the airfoil change with increasing radius, i.e. twist. Stress — rotational and gas bending forces — imposes further constraints on the changing shape of the airfoil with radius.

The first stage blade of the present inventon represents a balanced improvement over previous first stage blades for the intended range of turbine design parameters. The changing shape of the airfoil, as set forth below, minimizes aerodynamic losses while maximizing structural integrity. By reducing losses and improving work distribution among the stages (in particular, reducing the exhaust gas exit velocity), the first-stage blade of the present invention, in cooperation with the other blades and vanes of the turbine (assignee's Model No. W501D5), effects an increase in output power rating from 95 megawatts to 100 megawatts while allowing a slight reduction in turbine inlet temperature (2005°F to 1985°F (1096°C to 1085°C)).

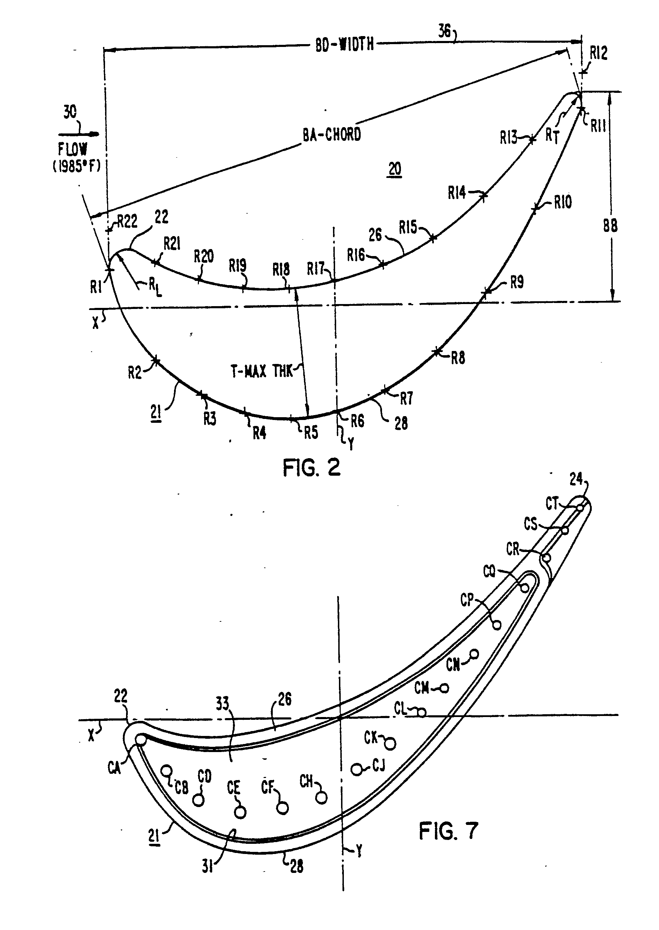

In Figures 2—7 there are shown various views of a first stage turbine blade 20 made in accordance with the principles of the invention. Thus, the blade 20 comprises an airfoil portion 21, leading edge 22, a trailing edge 24, a concave surface 26, and a convex surface 28, with gas flow approximating that depicted at 30 (Figure 2).

The airfoil portion 21 extends radially outwardly from a platform section 23 which in turn is based on a root extended portion 25. A blade root portion 27 is serrated for support on the rotor disc (not shown).

As a preferred example, the radial height or span of the airfoil portion 21 of the blade 20, from platform to tip, is approximately 6.52 inches. The cross-sectional area of the blade gradually decreases with increasing radius. Thus, the maximum thickness (Figure 2) of the blade ($T_{MAX}$) decreases from approximately 1.0 inch near the platform to 0.78 inch near the blade tip. The blade thickness is one characteristic which governs the structural integrity of the airfoil. Generally, the hub portion of the blade needs to be heavier and the blade tip needs to be thinner to provide the blade strength needed for increasing loading with decreasing radius.

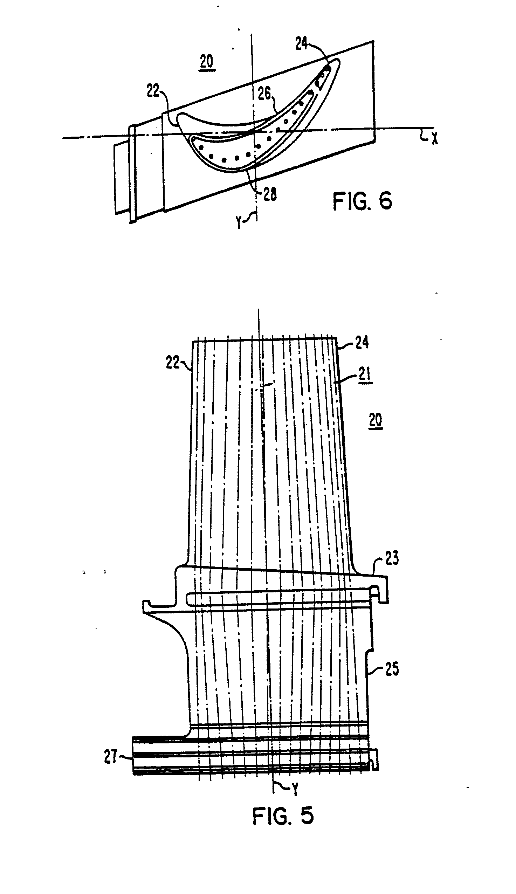

The width BD (Figure 2) of the blade 20, which is a measure of the extension of the profile along a line parallel to the rotor axis ($C_L$) 36, decreases from approximately 3.853 inches near the platform to approximately 3.240 inches near the tip. The blade chord BA (Figure 2) also, decreases somewhat with radius and twists with increasing radius as observed in the top plan view of Figure 6 to cause the decrease in blade with increasing radius.

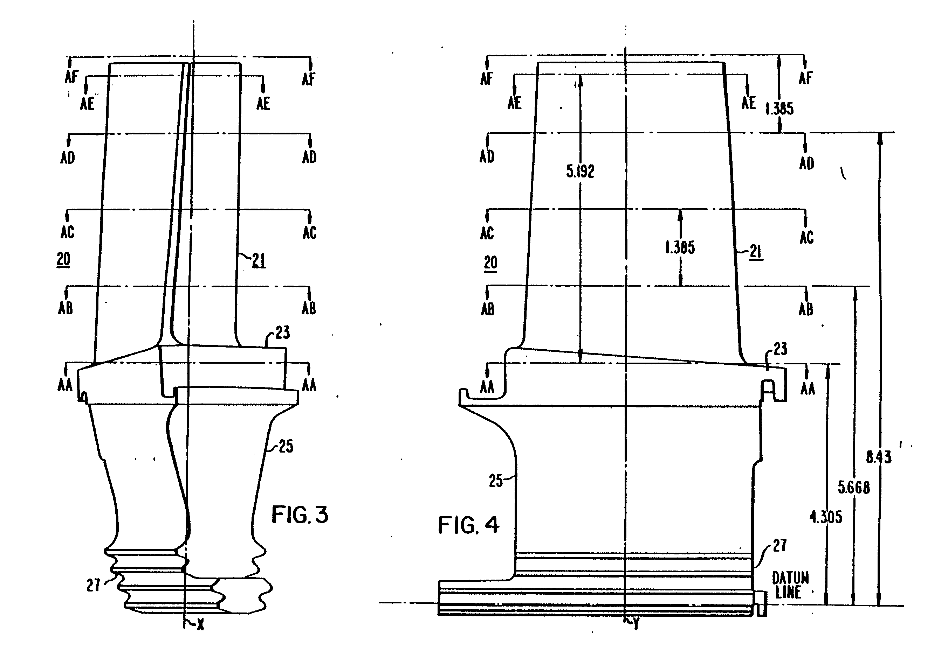

The surface profile of the blade airfoil portion is defined by a series of X—Y coordinates for the twenty-two points shown in Figure 2 at each of the reference planes shown in Figure 3 in accordance with the following table:

0 112 003

## AIRFOIL CO-ORDINATE POINTS

| SECTION | Distance From | R1 | R2 | R3 | R4 | R5 | R6 | R7 | R8 | R9 | R10 | R11 |
|---|---|---|---|---|---|---|---|---|---|---|---|---|
| AA-AA | Y-Y | -1.823 | -1.458 | -1.094 | -.729 | -.365 | .000 | +.406 | +.812 | +1.218 | +1.624 | +2.030 |
|  | X-X | + .308 | - .381 | - .660 | -.798 | -.843 | -.801 | -.641 | -.342 | + .110 | + .731 | +1.538 |
| AB-AB | Y-Y | -1.752 | -1.400 | -1.048 | -.696 | -.344 | +.008 | +.401 | +.794 | +1.187 | +1.580 | +1.973 |
|  | X-X | + .192 | - .449 | - .708 | -.825 | -.847 | -.783 | -.601 | -.292 | + .153 | + .746 | +1.498 |
| AC-AC | Y-Y | -1.680 | -1.340 | -1.001 | -.662 | -.323 | +.016 | +.396 | +.776 | +1.156 | +1.535 | +1.915 |
|  | X-X | + .075 | - .518 | - .755 | -.852 | -.851 | -.764 | -.561 | -.242 | + .197 | + .762 | +1.458 |
| AD-AD | Y-Y | -1.607 | -1.281 | - .955 | -.628 | -.302 | +.024 | +.391 | +.758 | +1.124 | +1.491 | +1.858 |
|  | X-X | - .043 | - .586 | - .803 | -.878 | -.854 | -.745 | -.520 | -.192 | + .240 | + .777 | +1.417 |
| AE-AE | Y-Y | -1.552 | -1.235 | - .919 | -.603 | -.286 | +.030 | +.387 | +.744 | +1.100 | +1.457 | +1.814 |
|  | X-X | - .133 | - .639 | - .840 | -.899 | -.858 | -.731 | -.490 | -.153 | + .274 | + .789 | +1.386 |
| AF-AF | Y-Y | -1.535 | -1.221 | - .908 | -.595 | -.281 | +.032 | +.386 | +.739 | +1.093 | +1.446 | +1.800 |
|  | X-X | - .160 | - .655 | - .851 | -.905 | -.858 | -.726 | -.480 | -.141 | + .284 | + .793 | +1.377 |

| SECTION | Distance From | R12 | R13 | R14 | R15 | R16 | R17 | R18 | R19 | R20 | R21 | R22 |
|---|---|---|---|---|---|---|---|---|---|---|---|---|
| AA-AA | Y-Y | +2.030 | +1.624 | +1.218 | +.812 | +.406 | .000 | -.365 | -.729 | -1.094 | -1.458 | -1.823 |
|  | X-X | +1.782 | +1.258 | + .842 | +.536 | +.328 | +.203 | +.154 | +.161 | + .225 | + .365 | + .620 |
| AB-AB | Y-Y | +1.973 | +1.580 | +1.187 | +.794 | +.401 | +.008 | -.344 | -.696 | -1.048 | -1.400 | -1.752 |
|  | X-X | +1.737 | +1.243 | + .841 | +.534 | +.317 | +.178 | +.112 | +.099 | + .039 | + .253 | + .476 |
| AC-AC | Y-Y | +1.915 | +1.535 | +1.156 | +.776 | +.396 | +.016 | -.323 | -.662 | -1.001 | -1.340 | -1.680 |
|  | X-X | +1.692 | +1.228 | + .840 | +.533 | +.306 | +.152 | +.069 | +.035 | + .051 | + .139 | + .329 |
| AD-AD | Y-Y | +1.858 | +1.491 | +1.124 | +.758 | +.391 | +.024 | -.302 | -.628 | - .955 | -1.281 | -1.607 |
|  | X-X | +1.647 | +1.214 | + .839 | +.531 | +.294 | +.126 | +.026 | -.028 | - .037 | + .026 | + .183 |
| AE-AE | Y-Y | +1.814 | +1.457 | +1.100 | +.744 | +.387 | +.030 | -.286 | -.603 | - .919 | -1.235 | -1.552 |
|  | X-X | +1.612 | +1.202 | + .838 | +.529 | +.286 | +.107 | -.007 | -.077 | - .104 | - .061 | + .071 |
| AF-AF | Y-Y | +1.800 | +1.446 | +1.093 | +.739 | +.386 | +.032 | -.281 | -.595 | - .908 | -1.221 | -1.535 |
|  | X-X | +1.601 | +1.199 | + .838 | +.529 | +.284 | +.101 | -.017 | -.092 | - .125 | - .088 | + .036 |

(All dimensions in inches)

## AIRFOIL CO-ORDINATE POINTS

| SECTION | Distance From | R1 | R2 | R3 | R4 | R5 | R6 | R7 | R8 | R9 | R10 | R11 |
|---|---|---|---|---|---|---|---|---|---|---|---|---|
| AA-AA | Y-Y | -4.630 | -3.703 | -2.779 | -1.852 | - .927 | .000 | +1.031 | +2.062 | +3.094 | +4.125 | +5.156 |
|  | X-X | + .782 | - .968 | -1.676 | -2.027 | -2.141 | -2.035 | -1.628 | - .869 | + .279 | +1.857 | +3.907 |
| AA-AB | Y-Y | -4.450 | -3.556 | -2.662 | -1.768 | - .874 | + .020 | +1.019 | +2.017 | +3.015 | +4.013 | +5.011 |
|  | X-X | + .488 | -1.140 | -1.798 | -2.100 | -2.151 | -1.989 | -1.527 | - .742 | + .389 | +1.895 | +3.805 |
| AC-AC | Y-Y | -4.267 | -3.404 | -2.543 | -1.681 | - .820 | + .041 | +1.006 | +1.971 | +2.936 | +3.899 | +4.864 |
|  | X-X | + .190 | -1.316 | -1.905 | -2.164 | -2.162 | -1.941 | -1.425 | - .615 | + .500 | +1.935 | +3.703 |
| AD-AD | Y-Y | -4.082 | -3.254 | -2.413 | -1.595 | - .767 | + .061 | + .993 | +1.925 | +2.855 | +3.787 | +4.719 |
|  | X-X | - .109 | -1.488 | -2.040 | -2.230 | -2.169 | -1.892 | -1.321 | - .488 | + .610 | +1.974 | +3.599 |
| AE-AE | Y-Y | -3.942 | -3.137 | -2.334 | -1.532 | - .726 | + .076 | + .983 | +1.890 | +2.794 | +3.701 | +4.608 |
|  | X-X | - .338 | -1.623 | -2.144 | -2.283 | -2.179 | -1.857 | -1.245 | - .389 | + .696 | +2.004 | +3.520 |
| AF-AF | Y-Y | -3.899 | -3.101 | -2.306 | -1.511 | - .714 | + .081 | + .980 | +1.877 | +2.776 | +3.673 | +4.572 |
|  | X-X | - .406 | -1.664 | -2.162 | -2.299 | -2.179 | -1.844 | -1.219 | - .358 | + .721 | +2.014 | +3.498 |

| SECTION | Distance From | R12 | R13 | R14 | R15 | R16 | R17 | R18 | R19 | R20 | R21 | R22 |
|---|---|---|---|---|---|---|---|---|---|---|---|---|
| AA-AA | Y-Y | +5.156 | +4.125 | +3.094 | +2.062 | +1.031 | .000 | - .927 | -1.852 | -2.779 | -3.703 | -4.630 |
|  | X-X | +4.526 | +3.195 | +2.139 | +1.361 | + .833 | + .516 | + .391 | + .409 | + .572 | + .927 | +1.575 |
| AB-AB | Y-Y | +5.011 | +4.013 | +3.015 | +2.017 | +1.019 | + .020 | - .874 | -1.768 | -2.662 | -3.556 | -4.450 |
|  | X-X | +4.412 | +3.157 | +2.136 | +1.356 | + .805 | + .452 | + .284 | + .251 | + .099 | + .643 | +1.209 |
| AC-AC | Y-Y | +4.864 | +3.899 | +2.936 | +1.971 | +1.006 | + .041 | - .820 | -1.681 | -2.543 | -3.404 | -4.267 |
|  | X-X | +4.298 | +3.119 | +2.134 | +1.354 | + .777 | + .386 | + .175 | + .089 | + .130 | + .353 | + .836 |
| AD-AD | Y-Y | +4.719 | +3.787 | +2.855 | +1.925 | + .993 | + .061 | - .767 | -1.595 | -2.426 | -3.254 | -4.082 |
|  | X-X | +4.183 | +3.084 | +2.131 | +1.349 | + .747 | + .320 | + .066 | - .071 | - .094 | + .066 | + .465 |
| AE-AE | Y-Y | +4.608 | +3.701 | +2.794 | +1.890 | + .983 | + .076 | - .726 | -1.532 | -2.334 | -3.137 | -3.942 |
|  | X-X | +4.094 | +3.053 | +2.129 | +1.344 | + .726 | + .272 | - .018 | - .196 | - .264 | - .155 | + .180 |
| AF-AF | Y-Y | +4.572 | +3.673 | +2.776 | +1.877 | + .980 | + .081 | - .714 | -1.511 | -2.306 | -3.101 | -3.899 |
|  | X-X | +4.067 | +3.045 | +2.129 | +1.344 | + .721 | + .257 | - .043 | - .234 | - .318 | - .224 | + .091 |

(All dimensions in cm)

DIMENSIONS FOR TYPICAL BLADE SECTIONS

| SECTION | RL | RT | T-THK | Z-DIM | BA CHORD | BB (REF) | BD WIDTH (REF) |
|---------|------|------|-------|-------|----------|----------|----------------|
| AA-AA | .141 | .074 | 1.000 | .155 | 4.051 | 1.628 | 3.853 |
| AB-AB | .134 | .074 | .956 | .155 | 3.956 | 1.589 | 3.725 |
| AC-AC | .126 | .074 | .910 | .155 | 3.862 | 1.550 | 3.595 |
| AD-AD | .118 | .075 | .864 | .156 | 3.772 | 1.511 | 3.465 |
| AE-AE | .111 | .075 | .828 | .156 | 3.707 | 1.481 | 3.366 |
| AF-AF | .109 | .075 | .816 | .157 | 3.687 | 1.472 | 3.335 |

(All dimensions in inches)

DIMENSIONS FOR TYPICAL BLADE SECTIONS

| SECTION | RL | RT | T-THK | Z-DIM | BA CHORD (REF) | BB (REF) | BD WIDTH |
|---------|------|------|-------|-------|----------------|----------|----------|
| AA-AA | .358 | .188 | 2.540 | .394 | 10.290 | 4.135 | 9.787 |
| AB-AB | .340 | .188 | 2.428 | .394 | 10.048 | 4.036 | 9.462 |
| AC-AC | .320 | .188 | 2.311 | .394 | 9.809 | 3.937 | 9.131 |
| AD-AD | .300 | .191 | 2.195 | .396 | 9.581 | 3.838 | 8.801 |
| AE-AE | .282 | .191 | 2.103 | .396 | 9.416 | 3.762 | 8.550 |
| AF-AF | .277 | .191 | 2.073 | .399 | .9.365 | 3.739 | 8.471 |

(All dimensions in cm)

The radius of curvature of the leading edge ($R_L$) is a measure of the sharpness of the leading edge transition from the concave 26 to the convex surface 28. The radius decreases (indicating a gradual increase in sharpness) from approximately 0.141 inch near the platform to 0.102 inch near the tip. The trailing edge radius ($R_T$) 40 increases very slightly from approximately 0.074 inch to approximately 0.075 inch near the tip.

The thickness of the trailing edge of the blade represents a compromise between competing aerodynamic, cooling, and mechanical considerations. The ideal trailing edge from an aerodynamic point of view would narrow to a point, but cooling considerations require a cooling channel (of a minimum 0.046 inch diameter) along the trailing edge. To provide structural integrity to a trailing edge supporting a cooling channel, as an example, the present blade is provided with a trailing edge thickness (Z—DIM, measured 0.10 inch from the trailing edge tip) which increases slightly from approximately 0.155 inch near the platform to approximately 0.157 inch near the tip.

Figure 7 shows a plan view of the blade tip where a wall 31 surrounds a tip cavity 33 wherein the span ends of blade cooling channels are disposed. The channels are generally linear along the blade span and substantially circular in cross-section, are spaced as shown, and have the following approximate diameters and locations at the reference planes indicated:

HOLE LOCATIONS

| SECTION | Distance From | CA | CB | CD | CE | CF | CH | CJ | CK | CL | CM |
|---|---|---|---|---|---|---|---|---|---|---|---|
| AF-AF | Y-Y | -1.418 | -1.239 | -1.012 | -.709 | -.415 | -.144 | +.108 | +.346 | +.572 | +.735 |
|  | X-X | - .137 | - .348 | - .542 | -.633 | -.600 | -.530 | -.348 | -.179 | +.026 | +.194 |
| AF-AA | Y-Y | -1.693 | --- | --- | --- | --- | --- | --- | --- | --- | --- |
|  | X-X | + .351 | --- | --- | --- | --- | --- | --- | --- | --- | --- |

| SECTION | Distance From | CN | CP | CQ | CR | CS | CT |
|---|---|---|---|---|---|---|---|
| AF-AF | Y-Y | +.947 | +1.116 | +1.317 | +1.486 | +1.617 | +1.725 |
|  | X-X | +.425 | + .606 | + .849 | +1.066 | +1.251 | +1.395 |
| AA-AA | Y-Y | --- | --- | --- | --- | --- | --- |
|  | X-X | --- | --- | --- | --- | --- | --- |

(All dimensions in inches)

HOLE LOCATIONS

| SECTION | Distance From | CA | CB | CD | CE | CF | CH | CJ | CK | CL | CM |
|---|---|---|---|---|---|---|---|---|---|---|---|
| AF-AF | Y-Y | -3.602 | -3.147 | -2.570 | -1.801 | -1.054 | - .366 | + .274 | + .879 | +1.453 | +1.867 |
|  | X-X | - .348 | - .884 | -1.377 | -1.608 | -1.524 | -1.346 | - .884 | - .455 | + .066 | + .493 |
| AA-AA | Y-Y | -4.300 | --- | --- | --- | --- | --- | --- | --- | --- | --- |
|  | X-X | + .892 | --- | --- | --- | --- | --- | --- | --- | --- | --- |

| SECTION | Distance From | CN | CP | CQ | CR | CS | CT |
|---|---|---|---|---|---|---|---|
| AF-AF | Y-Y | +2.405 | +2.835 | +3.345 | +3.774 | +4.107 | +4.382 |
|  | X-X | +1.080 | +1.539 | +2.156 | +2.708 | +3.178 | +3.543 |
| AA-AA | Y-Y | --- | --- | --- | --- | --- | --- |
|  | X-X | --- | --- | --- | --- | --- | --- |

(All dimensions in cm)

Thus, the surface profile, cooling, and mechanical characteristics of the present airfoil combine to define a unique blade structure, which operates in cooperation with other turbine blades and vanes to produce greater turbine efficiency within the predetermined set of turbine boundary conditions. The resultant increase in power-to-fuel ratio is achieved without resort to an increase in turbine inlet temperature.

**Claims**

1. A cooled first stage rotor blade for a land-based combustion turbine capable of driving an electric generator to generate electric power in the range of 100 megawatts, said blade (20) comprising airfoil portion (21) having a leading edge (22) and a trailing edge (24) with concave (26) and convex (28) surfaces therebetween providing a smooth airfoil surface, a root portion (27) for affixing said blade (20) to a turbine rotor, a platform portion (23) joining said airfoil portion (21) to said root portion (27), said airfoil portion (21) having a gradually decreasing cross-sectional area with increasing radius, a maximum cross-sectional thickness which between said convex (28) and concave (26) sides decreases with increasing radius, a cross-sectional width which decreases with increasing radius, a chord which decreases with increasing radius, characterized in that the radial height or span of the airfoil portion is about 6.5 inches (165.0 mm), the airfoil portion (21) having a maximum cross-sectional thickness that decreases from 1.00 inch (25.4 mm) to 0.78 of an inch (19.812 mm), the cross-sectional width that decreases from 3.853 inches (97.866 mm) to 3.240 inches (82.296 mm), the chord that decreases from 4.051 inches (102.895 mm) to 3.965 inches (100.711 mm), the leading edge having a radius that decreases with increasing blade radius from 0.141 inch (3.581 mm) to 0.102 inch (2.591 mm), the trailing edge radius increases with increasing blade radius from 0.074 inch (1.879 mm) to 0.075 inch (1.905 mm), said airfoil portion having a tip and sixteen cooling channels (CA to CT) of substantially circular cross-section extending radially from said root portion (27) through said airfoil portion (21) to said tip, said coolant channels being linear, with the location of said coolant channels defined by X—Y coordinates in preselected cross reference planes as defined by a holes location table as hereinbefore in the specification, and the surface profile of the blade airfoil portion (21) being defined by a series of X—Y coordinates in accordance with an airfoil coordinate points table as hereinbefore in the specification.

2. A blade according to claim 1 wherein the airfoil surface along said convex and concave sides is defined by a series of X—Y coordinates in each of a plurality of preselected cross reference planes spaced along the span of said airfoil portion as defined by the airfoil portion as defined by the airfoil coordinate points table in the specification.

**Patentansprüche**

1. Ein gekühlter Erstufen-Rotorflügel für eine an Land stationierte Brennkraftturbine, die zum Antrieb eines Generators dient, der Strom im Bereich von 100 Megawatt erzeugt, wobei der Flügel (20) aus einem Flügelprofilabschnitt (21) besteht, der eine Profil-Leitkante (22) und eine Profil-Hinterkante (24) mit einer konkaven (26) und einer konvexen (28) Oberfläche und dazwischen befindlicher glatter Tragflügelfläche aufweist und mit einem Endstück (27) zur Befestigung des Flügels (20) an einem Turbinenrotor versehen ist, der Flügelprofilabschnitt (21) durch eine Plattform mit dem Endstück (27) verbunden ist, wobei der Flügelprofilabschnitt (21) einen mit ansteigendem Radius allmählich kleiner werdenden Querschnittbereich aufweist, die grösste Querschnittsdicke zwischend den konvexen (28) und konkaven (26) Seiten mit steigendem Radius kleiner wird, die Querschnittsbreite mit steigendem Radius kleiner wird, und eine Profilsehne mit steigendem Radius kleiner wird, dadurch gekennzeichnet, dass die radiale Höhe oder Flügelbreite des Flügelprofilabschnitts etwa 165,0 mm beträgt und eine maximale Querschnittsdicke aufweist, die von 25,4 mm bis 19,812 mm absinkt, die Querschnittsbreite von 97,866 mm auf 82,296 mm absinkt, die Profilsehne von 102,895 mm auf 100,711 mm absinkt, die Profil-Leitkante einen Radius aufweist, der mit steigendem Flügelradius von 3,581 mm auf 2,591 mm absinkt, der Radius der Hinterkante mit steigendem Flügelradius von 1,879 mm auf 1,905 mm ansteigt, der Flügelprofilabschnitt eine Spitze und sechzehn Kühlkanäle (CA bis CT) aufweist, die radial vom Endstück (27) durch den Flügelprofilabschnitt (21) zu der Spitze geführt sind, wobei die Kühlkanäle linear sind und ihre Lage durch X—Y-Koordinaten in vorgewählten Hinweisebenen bestimmt ist, wie sie durch einen in der Beschreibung definierten Lochlagetisch definiert sind, und das Oberflächenprofil des Flügelprofilabschnitts (21) durch eine Reihe von X—Y-Koordinaten in Übereinstimmung mit einer die Flügelprofil-Koordinatenpunkte angebenden, in der Beschreibung angeführten Tabelle festgesetzt ist.

2. Ein Flügel nach Anspruch 1, worin die Flügelprofiloberfläche entlang der konvexen und konkaven Seiten durch eine Reihe von X—Y-Koordinaten in jeder einer Vielzahl von vorgewählten Hinweisebenen bestimmt ist, die entlang der Flügelbreite des gegebenen Flügelprofilabschnitts im Abstand angeordnet sind, wie durch die in der Beschreibung angeführten Flügelprofil-Koordinaten-Tabelle festgesetzt ist.

# 0 112 003

## Revendications

1. Aube de rotor refroidie pour un premier étage d'une turbine à combustion au sol capable d'entraîner un générateur électrique pour produire une puissance électrique se situant dans la gamme de 100 mégawatts, cette aube (20) comprenant une partie de surface portante (21) munie d'un bord d'attaque (22) et d'un bord arrière (24) séparés par une surface concave (26) et une surface convexe (28) pour former une surface portante lisse, une partie de base (27) destinée à fixer l'aube (20) à un rotor de turbine, une partie de plate-forme de support (23) reliant la partie de surface portante (21) à la partie de base (27), cette partie de surface portante (21) présentant une surface de section transversale diminuant progressivement lorsque le rayon augmente, une épaisseur de section transversale maximum qui diminue progressivement entre le côté convexe (28) et le côté concave (26), lorsque le rayon augmente, une largeur de section transversale qui diminue lorsque le rayon augmente, et une corde qui diminue lorsque le rayon augmente, aube caractérisée en ce que la hauteur ou l'envergure radiale de la partie de surface portante est d'environ 165,0 mm (6,5 pouces), en ce que la partie de surface portante (21) présente une épaisseur de section transversale maximum qui diminue pour passer de 25,4 mm (1,0 pouce) à 19,812 mm (0,78 pouce), en ce que la largeur de section transversale diminue pour passer de 97,866 mm (3,853 pouces) à 82,296 mm (3,240 pouces), en ce que la corde diminue pour passer de 102,895 mm (4,051 pouces) à 100,711 mm (3,965 pouces), en ce que le bord d'attaque présente un rayon qui diminue pour passer de 3,581 mm (0,141 pouce) à 2,591 mm (0,102 pouces), lorsque le rayon de l'aube augmente, en ce que le rayon du bord arrière augmente pour passer de 1,879 mm (0,074 pouce) à 1,905 mm (0,075 pouce) lorsque le rayon de l'aube augmente, en ce que la partie de surface portante comporte une pointe et seize conduits de refroidissement (CA à CT) de sections transversales sensiblement circulaires, partant radialement de la partie de base (27) et traversant la partie de surface portante (21) pour atteindre la pointe, ces conduits de réfrigérant étant linéaires et leurs positions étant définies par des coordonnées X—Y dans des plans de référence transversaux présélectionnés, comme défini par une table de positions de trous donné dans la description détaillée ci-dessus, et en ce que le profil de surface de la partie de surface portante (21) de l'aube est défini par une série de coordonnées X—Y correspondant au tableau de points de coordonnées de surface portante donné dans la description détaillée ci-dessus.

2. Aube selon la revendication 1, caractérisée en ce que la surface portante est définie, le long des côtés convexe et concave, par une série de coordonnées X—Y dans chacun d'un certain nombre de plans de référence transversaux présélectionnés espacés le long de l'envergure de la partie de surface portante définie par la partie de surface portante, comme défini par le tableau de points de coordonnées de surface portante donné dans la description détaillée ci-dessus.

11

FIG. I

FIG. 2

FIG. 7

FIG. 3

FIG. 4

FIG. 6

FIG. 5

4